# EUROPEAN PATENT SPECIFICATION

(11) **EP 4 316 907 B1**
(45) Date of publication and mention of the grant of the patent: **11.03.2026**
(21) Application number: 23168729.4
(22) Date of filing: 19.04.2023
(51) Int. Cl.: B60P 1/48, B60P 1/64, B66F 9/18, B66C 1/10, B66C 1/66

(54) **LIFT FRAME ASSEMBLY**
HEBERAHMENANORDNUNG
ENSEMBLE CADRE DE LEVAGE

(43) Date of publication of application: 07.02.2024
(73) Proprietor: Hiab AB, 215 32 Malmö (SE)
(72) Inventor: Vähä-Piikkiö, Ville, 21290 Rusko (FI); Nyström, Mikko, 21290 Rusko (FI)
(74) Representative: Bjerkén Hynell KB

(56) References cited:
- EP-A1- 3 838 666
- WO-A1-2020/174265
- NL-A- 9 300 079

## Description

### Technical field

The present disclosure relates to a lift frame assembly for a working equipment arranged to load and unload a load carrying object, e.g. a container, to/from a vehicle, by using a lift frame being attachable to the working equipment, and in particular lift frames adapted to load handling of ISO containers.

### Background

Lift frames are typically used together with a working equipment having a movable arm, such as hook lifts, to load and unload load carrying objects, such as containers, or more specifically ISO containers. Many types of containers are provided with connecting portions having openings or cavities at the corners of the container structure to enable efficient and safe locking to a lift frame and hence a working equipment used to load and unload the containers to/from vessels or vehicles used for transport, or when rearranging containers at e.g. ports, industries or logistics centres.

A container is conventionally in the form of a parallelepiped box, intended for transporting goods. The International Organization for Standardization (ISO) defines standards for containers, in particular of dimensions (length, width, height), mass, or configurations (disposition of orifices allowing the container to be gripped, etc.). Due to standardisation of the containers, the ISO standard facilitates handling thereof. For the purpose of transporting goods, the ISO containers have to be moved and lifted, for loading and unloading on various vehicles, for example trucks or boats.

Handling of an ISO container, for example in port installations, is conventionally carried out by means of a container lifting system using container spreaders engaging in orifices in the four corners of the upper face of the container, the upper face being the face opposite the face placed on the ground. The container spreader then locks to the container, for example by means of rotating locks. This type of container lifting system with spreaders may be used to load or unload the container to or from a vehicle. Handling of an ISO container can also be carried out by means of a lifting system engaging in orifices formed in the four corners of a vertical front face or rear face of the container, the front and opposite rear face (or wall) corresponding to a face of smaller dimensions of the container. For clarity it may be noted that the vertical walls with longer horizontal dimensions are often referred to as side walls.

Load-handling vehicles are trucks which are conceived as carrier vehicles for transporting load carrying objects such as containers. Examples of such load-handling vehicles are roll-on/roll-off dump trucks or hook-lift trucks. Load-handling vehicles may hence be equipped with a working equipment comprising a loading arm assembly to be able to load and unload a container to or from the vehicle by itself.

Furthermore, there are loading arm assemblies with lift frames which can receive a so-called ISO container. ISO standard 668 forms the respective standard for said ISO containers. The ISO standard 668 comprises, among others, 1C, 1CC and 1CX containers, each having different heights. The ISO containers are gripped by the corners, and a correspondingly configured loading arm assembly has at least two corner grippers, wherein the corner grippers can grip the ISO container at the corners.

In known solutions, such as for a hook-lift, a loading arm assembly may have a main arm, wherein the main arm is disposed so as to be pivotable on the vehicle chassis. In turn, an auxiliary arm, configured so as to be elbow-shaped, is disposed on the main arm. The auxiliary arm may be disposed on the main arm by an articulated joint, a telescopic arrangement or a fixed mounting. Often a gripping hook is configured on the free end of the articulated arm. A lift frame having four corner grippers can be attached to the elbow-shaped region of the articulated arm, so as to thus be able to also load and unload ISO containers. The lift frame when not in use can be unloaded onto the load-handling vehicle behind the cab.

Old lift frame designs have typically a manual locking to the container with manually inserted and secured pins. There are also solutions including automatic, and semi-automatic locking capabilities, see e.g. WO2021/255345 and NL 9 300 079 A Thus, this reflects an important aspect of the technical field that comprises moving towards automatic functionality where operators can remain in the cabin during the whole operation, which requires a new approach, and raises demands for new technical solutions.

Currently available solutions are often provided with a pivoting axis of the corner connections (sometimes also referred to as corner grippers or locks) being arranged along a lateral side of the frame (perpendicular to the plane in which the lift frame is extended in). These solutions are often problematic for the alignment of the lift frame to the container as there is only a small margin when it comes to lateral, side to side, alignment of the lift frame to the container. This in turn will put high requirements on the operator of the vehicle with the working equipment to align the vehicle to the container.

In the following some related prior art documents will be identified and briefly discussed. EP3838666A1 relates a lifting support for a container, comprising two upper pins and two lower pins, adapted to be inserted into complementary holes of the container when the lifting support is in a first position vis-à-vis the container two intermediate pins, positioned between the two upper pins and the two lower pins, and adapted to be inserted into two upper complementary openings of the container when the lifting support is in a second position vis-à-vis the container.

JP2020104768A relates to a container handling vehicle comprising a chassis on which standard containers are loaded; a handling arm, which has a hook at a tip thereof, is provided on an upper part of the chassis so as to be rotatable forward and backward, and performs a handling operation for standard containers; an adapter which is installed on the standard container and is used for the handling operation; a stand table which supports the adapter on the chassis, and a control unit which controls the handling arm. WO2020/174265A1 relates to a container handling device that can be installed on a vehicle, the device being configured for attaching a front end of a container placed in front of a rear end of a loading surface the vehicle.

The object of the present invention is to achieve an improved lift frame assembly that in particular is adapted to be used for automatic or semi-automatic operations, specifically to provide secure, robust and reliable operations that require less manual intervention than presently applied systems.

### Summary

The above-mentioned objects are achieved by the present invention according to the independent claims.

Preferred embodiments are set forth in the dependent claims.

In one aspect of the lift frame assembly according to the present invention, all the connecting structures are configured to be controlled to be in the fully retracted position range during an alignment process when aligning the lift frame to the load carrying object in order to proceed with the loading by locking the lift frame to the load carrying object. When all connecting structures are in their fully retracted position ranges, none of them will interfere with the load carrying object during an attachment procedure.

Thus, the arrangement of the connecting structures according to the invention allows for a certain margin in the lateral alignment while the connecting structures are in their fully retracted position ranges.

A further advantage with the lift frame assembly according to the invention is that it offers a robust and rigid locking of the lift frame to the load carrying object in a closed position, without adding width outside what standards and regulations allow when the load carrying object is loaded to a vehicle. The robust and rigid, but yet space efficient, locking of the lift frame is accomplished through e.g. the fact that the pivot axis of the connecting structure is being parallel to a vertical symmetry axis S of the lift frame. This enables for the length of the connecting structure to extend in the vertical direction along this pivot axis and thereby create a robust and rigid connection between the lift frame and the load carrying object when in a closed position, without the need for adding thickness to the connecting structure for the robustness.

In addition; by aligning the pivot axis with the rear side of the lift frame, such as outlined in further embodiment of the invention, the robustness of the locking in a closed position of the connecting structure will be further improved as the connecting structure will be supported by the transversal side of the lift frame. This will further also support the alignment of the lift frame to the load carrying object.

The alignment process is improved as in one example, where the upper connectors are initially attached to the load carrying object. This may be performed even if the vertical orientation of the symmetry axis S of the lift frame does not coincide with the vertical side walls of the load carrying object, because, the connecting structures, when in their fully retracted ranges, will not interfere with the load carrying object, in particular the side of the load carrying object facing the lift frame, as they are below the planar virtual contact plane.

In addition, during the attachment procedure, the connecting structures may assist in aligning the lift frame to the side walls of the load carrying object when the connecting structures are moved around their pivot axes towards the closed position.

One advantage obtained by the present invention, for a driver, operating the loading of e.g. an ISO container to a truck, is that the whole loading operation may be operated from the truck cabin where the driver is in a protected environment, while still allowing a margin of mismatch in the lateral alignment of the lift frame to the container, where the connecting structures will be able to correct the mismatch when being controlled to move in the direction towards the locked position, either manually, semi-automatically, or fully automatically.

The lift frame assembly according to the present invention is particularly beneficial to use when a load carrying object is positioned on a slope in uneven terrain and specifically when a vehicle, provided with a working equipment and the lift frame assembly, is in an inclined position in relation to the position of the load carrying object.

### Brief description of the drawings

Figure 1 is a simplified illustration of a working equipment mounted to a vehicle and provided with a lift frame assembly.
Figure 2 is a block diagram of the working equipment according to the present invention.
Figures 3 and 4 show front and side views of the lift frame assembly according to the present invention.
Figures 5 and 6 are schematic illustrations of a side view of a lift frame assembly according to embodiments of the present invention showing two different stages of the operation.
Figures 7 and 8 are schematic illustrations according to embodiments of the present invention showing the connecting structure in two different stages of the operation.
Figures 9 and 10 are schematic and simplified illustrations showing embodiments of the connecting structures in two different stages of the operation.

### Detailed description

The lift frame assembly, a working equipment comprising the lift frame assembly and a vehicle provided with the working equipment, will now be described in detail with references to the appended figures. Throughout the figures the same, or similar, items have the same reference signs. Moreover, the items and the figures are not necessarily to scale, emphasis instead being placed upon illustrating the principles of the invention.

The lift frame assembly, defined by the appended claims includes the new solution for the corner connectors, also referred to as grippers, which is the focus of the present invention, and which are structured to be used together with a working equipment for loading and unloading load carrying objects to and from a vehicle.

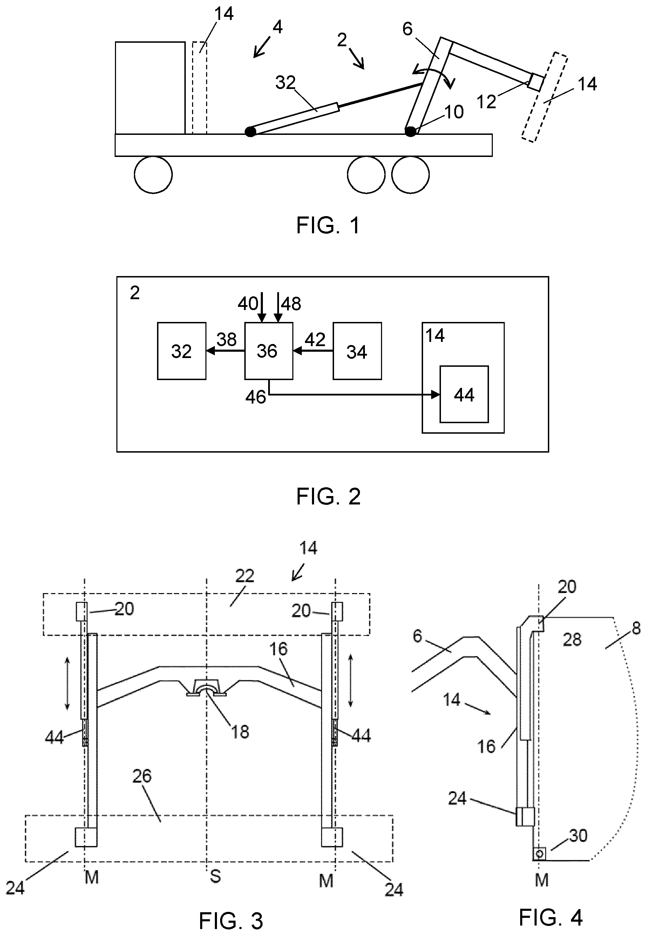

First, with references to figures 1-4, a working equipment 2 arranged to be mounted to a vehicle 4, will be described in detail.

The working equipment 2 comprises a movable arm 6 for loading and unloading a load carrying object 8, such as a container, to/from the vehicle 4. The movable arm 6 has a first end 10 connected to the vehicle and a second end 12 arranged to connect the movable arm 6 to the load carrying object 8 during the loading or unloading.

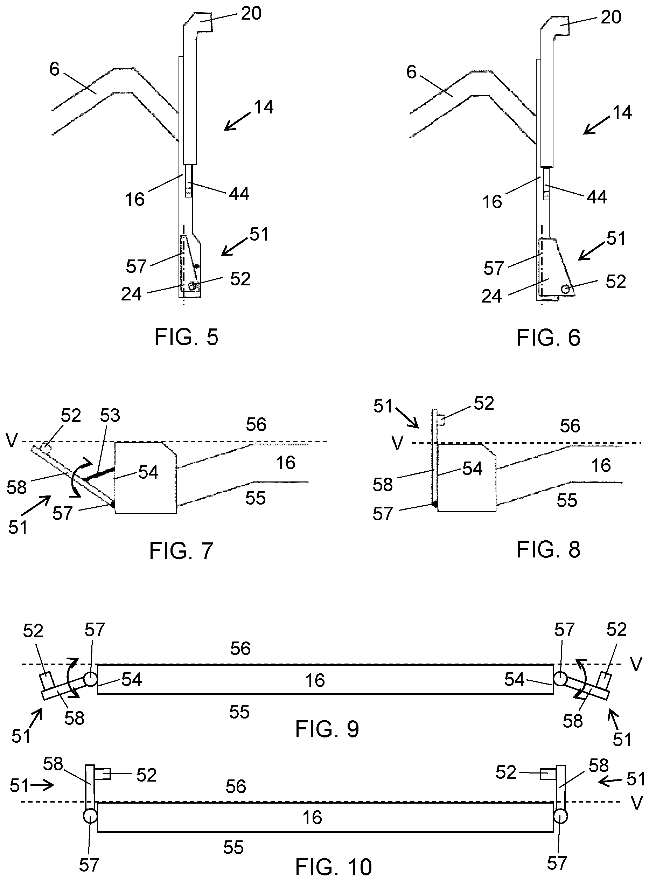

The working equipment 2 further comprises a lift frame assembly 14 comprising hydraulic and/or electrical actuators 44 arranged to operate the pivoting movements of connecting structures 51 (see figures 5-10), which will be further described below, an actuator system 32, and further a sensor system 34 provided to monitor the movements of the working equipment 2 and the lift frame 16. A control unit 36 is provided configured to generate control instructions 38 to control the operation of the actuator system 32 in response to a loading/unloading command 40 for the loading and/or unloading of the load carrying object 8 and sensor signals 42 received from the sensor system 34. Hoses for a possible hydraulic system and/or electrical cables for electric actuators and/or sensors may be guided from the vehicle and/or working equipment to the lift frame assembly via the movable arm.

Preferably, the set of actuators 44 comprises actuators configured to change the positions of upper connectors 20 relative to an attachment part 18 along parallel movement axes M, when the working equipment is configured to perform an attachment procedure, i.e. a procedure for attaching the lift frame to the load carrying object. The control unit 36 is further configured to generate instructions 46 to control the set of actuators 44 to change the positions of the upper connectors 20 along the movement axes M during an attachment procedure for attaching the lift frame 16 to the load carrying object 8 in response of an attachment command 48, and sensor signals 42 from the sensor system 34. The instructions 46 may then include instructions to change the positions of the upper connectors 20, and/or also instructions to perform the actual attachments of these connectors to the load carrying object during an attachment procedure.

The set of actuators 44 are preferably provided with position sensors, which may be applied to adjust the distance between upper and lower connectors to correspond to the dimension of the load carrying object.

The unloading and/or loading with the lift frame together with a working equipment and vehicle are preferably part of an autonomous or semiautonomous loading sequence.

Thus, a lift frame assembly 14 is provided, for a working equipment 2 arranged to load and unload a load carrying object 8 to/from a vehicle 4. Referring also to figures 5-10, the lift frame assembly 14 comprises a lift frame 16 arranged to connect the working equipment 2 to the load carrying object 8 during loading and unloading to/from the vehicle 4. The lift frame 16 has a rear side 55 arranged towards the working equipment 2, a front side 56 arranged to face the load carrying object 8, during the loading and unloading, and a set of connectors 20, 24 mounted to the lift frame 16 that is further arranged to lock the lift frame 16 to corresponding connecting portions 28, 30 of the load carrying object 8 during loading and unloading to/from the vehicle 4.

Each of at least two of the connectors of the set of connectors 20, 24 comprises a connecting structure 51 arranged to pivot around a pivot axle, having a longitudinal extension along a pivot axis 57, between a closed position wherein the lift frame 16 is arranged to be locked to the load carrying object 8 and a retracted position range wherein the lift frame 16 is not locked to the load carrying object 8.

The pivot axis 57 being parallel to a vertical symmetry axis S (see figure 3) of the lift frame. In figures 3 and 4 are shown movement axes M illustrating movement directions of the set of connectors, according to one example of an embodiment of the invention.

Each connecting structure 51 comprises a locking protrusion 52 (see figures 7-10) arranged to engage with a corresponding cavity at a connection portion 28, 30 of the load carrying object 8 to lock, when in the closed position, the lift frame 16 to the load carrying object 8. The connecting structure also comprises an actuator 53 arranged to operate the pivoting movement of the connecting structure 51 between the closed position and the retracted position range by moving the connecting structure 51 around the pivot axis 57. Furthermore, when the connecting structure 51 is in the retracted position range, the connecting structure 51 is arranged to be pivoted into a fully retracted position range, being a position range where no part of the connecting structure 51 extends beyond a planar virtual contact plane V defined by load carrying object contacting surfaces of the front side 56 of the lift frame 16 in the direction of the load carrying object 8.

Figures 7-10 are schematic views from above of one side (figures 7 and 8) and of both sides (figures 9 and 10) of a part of the lift frame 16 where the connecting structure 51 is arranged, and where the planar virtual contact plane V is shown as dashed lines.

In figures 7 and 9 the connecting structure 51 is in its fully retracted position range, i.e. in a position range where no part extends beyond the virtual contact plane V, and thereby not will interfere with any part of the load carrying object 8 during an alignment procedure. Figures 8 and 10 show the connecting structure moved into a closed position wherein it is arranged for locking the lift frame to the load carrying object.

In one embodiment illustrated by figures 7 and 8, the connecting structure 51 comprises a pivoting arm 58 having a first end connected to a pivot axle which is directed along said pivot axis 57, and a second end where the locking protrusion 52 is provided. In the closed position, see figure 8, the pivoting arm 58 is configured to extend essentially perpendicular to the front side 56 of the lift frame 16 in the direction of the load carrying object 8, and in said retracted position range, see figure 7, the pivoting arm 58 is arranged to perform its pivoting movement in a movement space beyond a plane defined by a transversal side 54 of the lift frame 16. The transversal side 54 has an extension essentially perpendicular to the rear side 55 and the front side 56 of the lift frame 16.

According to one embodiment, the pivot axis 57 is aligned with the transversal side 54 of the lift frame 16, and that the transversal side has an extension essentially perpendicular to said rear side 55 and front side 56 of the lift frame 16.

According to one embodiment of the lift frame assembly 14, the pivot axis 57 is aligned with the rear side 55 of the lift frame. The extension of the transversal side 54 will in this embodiment further support the position of the connecting structure 51 in its closed position enabling a robust and rigid locking of the lift frame to the load carrying object and further to support the alignment of the lift frame to the load carrying object.

In still another embodiment, the actuator 53 is a linear actuator, which may e.g. be hydraulically, or electrically, operated.

According to another embodiment, the pivot axis 57 is aligned with the rear side 55 of the lift frame 16, and that the actuator 53 is a linear actuator, and that the linear actuator is attached to the lift frame 16 close to the front side 56 of the lift frame 16, and configured to apply pivotal movement to the connecting structure 51 by applying pushing and/or pulling linear forces to a pivoting arm 58 of the connecting structure 51. This embodiment is illustrated by figures 7 and 8.

There are important advantages with arranging the pivot axis 57 at a distance to the front wall of the load carrying object, i.e. closer to the rear side 55 of the lift frame than the front side 56 of the lift frame, and in a vertically orientation with reference to the vertical side walls of the load carrying object. One advantage is that it allows for a connection to the linear actuator 53 which may be attached to inner parts of the lift frame 16 and is thereby protected from outside manipulation, and another advantage is that the connecting structure will be operated with a pulling force when moved to the closed position, which results in an advantageous use of the applied movement energy.

In one other embodiment, the actuator 53 instead is a torsional actuator configured to apply torsional movement to a pivot axle, directed along the pivot axis 57, of the connecting structure 51.

According to an embodiment, the pivot axis 57 is hence arranged in a plane of the rear side 55 of the lift frame, or in its close proximity. In a preferred embodiment the pivot axis 57 is arranged to be parallel to the vertical sides of the load carrying object 8 during loading and unloading.

However, the pivot axis 57 may be arranged in the plane of the transversal side 55 of the lift frame, at any position between the rear side 55 and the front side 56 which is generally illustrated by the schematic illustrations shown in figures 9 and 10.

In figure 5 the connecting structure 51 is in its fully retracted position range, and in figure 6 the connecting structure 51 is in its closed position. As seen from figures 5 and 6 the connecting structure illustrated therein has an essentially triangular shape along the pivoting arm from the pivot axis 57 to the locking protrusion 52. It is advantageous that the connecting structure 51 has a certain surface area that extends from the pivot axis to the locking protrusion as it may then be used during an alignment procedure to gently guide, during movement of the connecting structure, the load carrying object into a position where the locking protrusion may be inserted into a mating connector cavity of the load carrying object. The size and shape of the connecting structure may naturally vary, e.g. having an extension along the pivot axis 57 in the range of 10-40 cm, and along the pivoting arm 58 in the range of 10-40 cm. A relatively large extension of the connecting structure along the pivot axis will result in a robust and rigid locking of the lift frame to the load carrying object without otherwise adding to the thickness of the connecting structure.

Particularly with reference to figure 3, the lift frame 16 is provided with an attachment part 18 that may be in the shape of a bar adapted to engage with a hook at the second end 12 of the movable arm 6. This type of attachment provides a releasable connection between the parts that further allows for the lift frame assembly to pivot around the connection point. This type of attachment may further allow the lift frame assembly to be horizontally aligned when it is free-hanging at the hook.

Other alternatives for attachment part 18 and the second end 12 are further possible that would provide a similar releasable and pivoting connection. As yet another alternative, a non-releasable attachment between the attachment part 18 and the second end 12 may be provided.

It should be noted that the schematic illustrations shown in figures 4-6 are applicable both for a releasable and a non-releasable attachment between the lift frame and the second end of the movable arm.

The lift frame 16 has preferably the shape of the letter "H" with two vertical side structures that a set of actuators 44 that is configured to change the positions of the upper connectors may be mounted to. A structure connecting, or linking, these two vertical side structures are further part of the lift frame in the H-shaped embodiment. The attachment part 18 may further be arranged at this connecting, or linking, structure in this embodiment.

An alternative to the "H" shape of the lift frame 16 may however be an "X" shape. A rear side of the lift frame 16 faces the working equipment and the attachment part 18 is hence accessible from the rear side, while the front side of the lift frame 16 is directed towards the load carrying object 8.

The H-shape is advantageous in that it provides a structure and symmetry of the lift frame that results in a natural horizontal levelling when the lift frame is hanging free at the second end 12 of the movable arm. The vertical side structures may further be arranged to at least partly cover and protect the actuators 44. Thus, the lift frame, as illustrated in figure 3 has essentially the shape of the capital letter H.

In another embodiment, the set of connectors comprises a pair of upper connectors 20 mounted at opposite sides of an upper part 22 of the lift frame 16, and a pair of lower connectors 24 mounted at opposite sides of a lower part 26 of the lift frame 16, and that each of the lower connectors 24 comprises one connecting structure 51.

The connectors, or grippers, are in the figures shown as pairs of upper and lower connectors 20, 24 which are adapted to attach the upper and lower parts 22, 26 of the lift frame 16 to a corresponding upper part 28 and lower part 30, respectively, of the load carrying object 8. The upper and lower parts of the load carrying object are provided with openings/orifices according to a specified standard, where the connectors of the lift frame will attach and lock in order to perform a loading/unloading procedure.

The upper connectors 20, and the lower connectors 24, may be of the same type or may alternatively be specifically adapted to e.g. the locking to the upper or lower portion of the load carrying object 8. In order to be remotely controlled, the connectors' movements are operated by actuators, e.g. electrical or hydraulic actuators, so that there is no need for the operator to get out of the cabin during this operation.

In particular, the front side of the lift frame, i.e. the side of the lift frame facing the load carrying object during use, is provided with surfaces intended to be in physical contact with the vertical front face or rear face of the load carrying object when the lift frame is connected to the load carrying object. The plane defined by these contact surfaces defines the planar virtual contact plane V.

## Claims

1. A working equipment (2) comprising a movable arm (6) for loading and unloading a load carrying object (8), such as a container, to/from a vehicle (4), the movable arm (6) has a first end (10) connected to the vehicle and a second end (12) arranged to connect the movable arm (6) to the load carrying object (8) during the loading or unloading, the working equipment (2) comprises a lift frame assembly (14) arranged to load and unload the load carrying object (8) to/from the vehicle (4), the lift frame assembly (14) comprises a lift frame (16) arranged to connect the working equipment (2) to the load carrying object (8) during loading and unloading to/from the vehicle (4), wherein the lift frame (16) has a rear side (55) arranged towards the working equipment (2), a front side (56) arranged to face the load carrying object (8), during the loading and unloading, and a set of connectors (20, 24) mounted to the lift frame (16) that is further arranged to lock the lift frame (16) to corresponding connecting portions (28, 30) of the load carrying object (8) during loading and unloading to/from the vehicle (4), each of at least two of the set of connectors (20, 24) comprises a connecting structure (51) arranged to pivot around a pivot axis (57) between a closed position wherein the lift frame (16) is arranged to be locked to the load carrying object (8) and a retracted position range wherein the lift frame (16) is not locked to the load carrying object (8), and that said pivot axis (57) being parallel to a vertical symmetry axis S of the lift frame, each connecting structure (51) comprises a locking protrusion (52) arranged to engage with a corresponding cavity at a connection portion (28, 30) of the load carrying object (8) to lock, when in the closed position, the lift frame (16) to the load carrying object (8), and an actuator (53) arranged to operate the pivoting movement of the connecting structure (51) between the closed position and the retracted position range by moving the connecting structure (51) around said pivot axis (57), and wherein, in the retracted position range, the connecting structure (51) is arranged to be pivoted into a fully retracted position range, being a position range where no part of the connecting structure (51) extends beyond a planar virtual contact plane V defined by load carrying object contacting surfaces of the front side (56) of the lift frame (16) in the direction of the load carrying object (8), wherein the working equipment comprises hydraulic and/or electrical actuators (44, 53) arranged to operate the pivoting movements of the connecting structures (51), **characterized in that** it furher comprises an actuator system (32), a sensor system (34) provided to monitor the movements of the working equipment (2) and the lift frame (16), and a control unit (36) configured to generate control instructions (38, 46) to control the operation of the actuator system (32) and of the hydraulic and/or electrical actuators (44, 53) in response to a loading/unloading command (40) for the loading and/or unloading of the load carrying object (8) and sensor signals (42) received from the sensor system (34).

2. The working equipment (2) according to claim 1, wherein the connecting structure (51) comprises a pivoting arm (58) having a first end connected to a pivot axle directed along said pivot axis (57), and a second end where the locking protrusion (52) is provided, wherein in said closed position the pivoting arm (58) is configured to extend essentially perpendicular to said front side (56) of the lift frame (16) in the direction of the load carrying object (8), and in said retracted position range, the pivoting arm (58) is arranged to perform its pivoting movement in a movement space beyond a plane defined by a transversal side (54) of the lift frame (16), wherein said transversal side has an extension essentially perpendicular to said rear side (55) and said front side (56) of the lift frame (16).

3. The working equipment (2) according to claim 1 or 2, wherein said pivot axis (57) is aligned with a transversal side (54) of said lift frame (16), and wherein said transversal side has an extension essentially perpendicular to said rear side (55) and front side (56) of the lift frame (16).

4. The working equipment (2) according to any of claims 1-3, wherein said pivot axis (57) is aligned with the rear side (55) of the lift frame.

5. The working equipment (2) according to any of claims 1-4, wherein said actuator (53) is a linear actuator.

6. The working equipment (2) according to any of claims 1-3, wherein said pivot axis (57) is aligned with the rear side (55) of the lift frame (16), and that said actuator (53) is a linear actuator, and wherein said linear actuator is attached to the lift frame (16) close to said front side (56) of the lift frame (16), and configured to apply pivotal movement to said connecting structure (51) by applying pushing and/or pulling linear forces to a pivoting arm (58) of said connecting structure (51).

7. The working equipment (2) according to any of claims 1-4, wherein said actuator (53) is a torsional actuator configured to apply torsional movement to a pivot axle, directed along said pivot axis (57), of the connecting structure (51).

8. The working equipment (2) according to any of claims 1-7, wherein all said connecting structures (51) are configured to be controlled to be in said fully retracted position range during an alignment process when aligning the lift frame (16) to the load carrying object (8) in order to proceed with the loading by locking the lift frame (16) to the load carrying object (8).

9. The working equipment (2) according to any of claims 1-8, wherein said set of connectors comprises a pair of upper connectors (20) mounted at opposite sides of an upper part (22) of the lift frame (16), and a pair of lower connectors (24) mounted at opposite sides of a lower part (26) of the lift frame (16), and wherein each of said lower connectors (24) comprises a said connecting structure (51).

10. A vehicle comprising the working equipment according to any of claims 1-9.

## Patentansprüche

1. Arbeitsausrüstung (2), umfassend einen bewegbaren Arm (6) zum Laden und Ausladen eines lasttragenden Objekts (8), wie etwa eines Behälters, auf ein/aus einem Fahrzeug (4), wobei der bewegbare Arm (6) ein erstes Ende (10), das mit dem Fahrzeug verbunden ist, und ein zweites Ende (12), das dazu vorgesehen ist, den bewegbaren Arm (6) während des Ladens oder des Ausladens mit dem lasttragenden Objekt (8) zu verbinden, aufweist, die Arbeitsausrüstung (2) eine Heberahmenanordnung (14) umfasst, die dazu vorgesehen ist, das lasttragende Objekt (8) auf das/aus dem Fahrzeug (4) zu laden oder auszuladen, die Heberahmenanordnung (14) einen Heberahmen (16) umfasst, der dazu vorgesehen ist, die Arbeitsausrüstung (2) während des Ladens und des Ausladens auf das/aus dem Fahrzeug (4) mit dem lasttragenden Objekt (8) zu verbinden, wobei der Heberahmen (16) eine hintere Seite (55), die in Richtung der Arbeitsausrüstung (2) vorgesehen ist, eine vordere Seite (56), die dazu vorgesehen ist, dem lasttragenden Objekt (8) während des Ladens und des Ausladens zugewandt zu sein, und einen Satz von Verbindern (20, 24), der auf dem Heberahmen (16) montiert ist, aufweist, der ferner dazu vorgesehen ist, den Heberahmen (16) während des Ladens und des Ausladens auf das/aus dem Fahrzeug (4) mit entsprechenden Verbindungsabschnitten (28, 30) des lasttragenden Objekts (8) zu verriegeln,
wobei jeder mindestens zweier des Satzes von Verbindern (20, 24) eine Verbindungsstruktur (51) umfasst, die dazu vorgesehen ist, um eine Schwenkachse (57) zwischen einer geschlossenen Position, in welcher der Heberahmen (16) dazu vorgesehen ist, mit dem lasttragenden Objekt (8) verriegelt zu sein, und einem eingefahrenen Positionsbereich, in dem der Heberahmen (16) nicht mit dem lasttragenden Objekt (8) verriegelt ist, zu schwenken, und wobei, da die Schwenkachse (57) parallel mit einer vertikalen Symmetrieachse S des Heberahmens verläuft, jede Verbindungsstruktur (51) einen Verriegelungsvorsprung (52), der dazu vorgesehen ist, einen entsprechenden Hohlraum an einem Verbindungsabschnitt (28, 30) des lasttragenden Objekts (8) in Eingriff zu nehmen, um, wenn in der geschlossenen Position, den Heberahmen (16) mit dem lasttragenden Objekt (8) zu verriegeln, und ein Stellglied (53) umfasst, das dazu vorgesehen ist, die Schwenkbewegung der Verbindungsstruktur (51) durch Bewegen der Verbindungsstruktur (51) um die Schwenkachse (57) zwischen der geschlossenen Position und dem eingefahrenen Positionsbereich zu betreiben, und wobei in dem eingefahrenen Positionsbereich die Verbindungsstruktur (51) dazu vorgesehen ist, in einen vollständig eingefahrenen Positionsbereich geschwenkt zu werden, der ein Positionsbereich ist, in dem sich kein Teil der Verbindungsstruktur (51) über eine planare virtuelle Kontaktebene V hinaus erstreckt, die durch das lasttragende Objekt kontaktierende Oberflächen der vorderen Seite (56) des Heberahmens (16) in der Richtung des lasttragenden Objekts (8) definiert wird,
wobei die Arbeitsausrüstung hydraulische und/oder elektrische Stellglieder (44, 53) umfasst, die dazu vorgesehen sind, die Schwenkbewegungen der Verbindungsstrukturen (51) zu betreiben, **dadurch gekennzeichnet, dass** sie ferner ein Stellgliedsystem (32), ein Sensorsystem (34), das dazu bereitgestellt ist, die Bewegungen der Arbeitsausrüstung (2) und des Heberahmens (16) zu überwachen, und eine Steuerungseinheit (36) umfasst, die dazu konfiguriert ist, Steuerungsanweisungen (38, 46) zu erzeugen, um den Betrieb des Stellgliedsystems (32) und der hydraulischen und/oder elektrischen Stellglieder (44, 53) als Reaktion auf einen Lade-/Ausladebefehl (40) für das Laden und/oder das Ausladen des lasttragenden Objekts (8) und Sensorsignale (42), die von dem Sensorsystem (34) empfangen werden, zu steuern.

2. Arbeitsausrüstung (2) nach Anspruch 1, wobei die Verbindungsstruktur (51) einen Schwenkarm (58) umfasst, der ein erstes Ende, das mit einer Schwenkwelle verbunden ist, die entlang der Schwenkachse (57) gerichtet ist, und ein zweites Ende, an dem der Verriegelungsvorsprung (52) bereitgestellt ist, aufweist, wobei in der geschlossenen Position der Schwenkarm (58) dazu konfiguriert ist, sich im Wesentlichen senkrecht zu der vorderen Seite (56) des Heberahmens (16) in der Richtung des lasttragenden Objekts (8) zu erstrecken, und in dem eingefahrenen Positionsbereich der Schwenkarm (58) dazu vorgesehen ist, seine Schwenkbewegung in einem Bewegungsraum über eine Ebene hinaus durchzuführen, die durch eine quere Seite (54) des Heberahmens (16) definiert wird, wobei die quere Seite eine Erstreckung aufweist, die im Wesentlichen senkrecht zu der hinteren Seite (55) und der vorderen Seite (56) des Heberahmens (16) verläuft.

3. Arbeitsausrüstung (2) nach Anspruch 1 oder 2, wobei die Schwenkachse (57) mit einer queren Seite (54) des Heberahmens (16) ausgerichtet ist und wobei die quere Seite eine Erstreckung aufweist, die im Wesentlichen senkrecht zu der hinteren Seite (55) und der vorderen Seite (56) des Heberahmens (16) verläuft.

4. Arbeitsausrüstung (2) nach einem der Ansprüche 1-3, wobei die Schwenkachse (57) mit der hinteren Seite (55) des Heberahmens ausgerichtet ist.

5. Arbeitsausrüstung (2) nach einem der Ansprüche 1-4, wobei das Stellglied (53) ein lineares Stellglied ist.

6. Arbeitsausrüstung (2) nach einem der Ansprüche 1-3, wobei die Schwenkachse (57) mit der hinteren Seite (55) des Heberahmens (16) ausgerichtet ist und das Stellglied (53) ein lineares Stellglied ist und wobei das lineare Stellglied nahe der vorderen Seite (56) des Heberahmens (16) an dem Heberahmen (16) befestigt und dazu konfiguriert ist, durch Anwenden linearer Druck- und/oder Ziehkräfte auf einen Schwenkarm (58) der Verbindungsstruktur (51) eine Schwenkbewegung auf die Verbindungsstruktur (51) anzuwenden.

7. Arbeitsausrüstung (2) nach einem der Ansprüche 1-4, wobei das Stellglied (53) ein Torsionsstellglied ist, das dazu konfiguriert ist, eine Torsionsbewegung auf eine Schwenkwelle, die entlang der Schwenkachse (57) gerichtet ist, der Verbindungsstruktur (51) anzuwenden.

8. Arbeitsausrüstung (2) nach einem der Ansprüche 1-7, wobei alle Verbindungsstrukturen (51) dazu konfiguriert sind, während eines Ausrichtungsprozesses beim Ausrichten des Heberahmens (16) mit dem lasttragenden Objekt (8) dazu gesteuert zu werden, in dem vollständig eingefahrenen Positionsbereich zu sein, um durch Verriegeln des Heberahmens (16) mit dem lasttragenden Objekt (8) mit dem Laden fortzufahren.

9. Arbeitsausrüstung (2) nach einem der Ansprüche 1-8, wobei der Satz von Verbindern ein Paar oberer Verbinder (20), das an gegenüberliegenden Seiten eines oberen Teiles (22) des Heberahmens (16) montiert ist, und ein Paar unterer Verbinder (24), das an gegenüberliegenden Seiten eines unteren Teiles (26) des Heberahmens (16) montiert ist, umfasst und wobei jeder der unteren Verbinder (24) eine besagte Verbindungsstruktur (51) umfasst.

10. Fahrzeug, umfassend die Arbeitsausrüstung nach einem der Ansprüche 1-9.

## Revendications

1. Équipement de chantier (2) comprenant un bras mobile (6) pour charger et décharger un objet porteur de charge (8), tel qu'un conteneur, vers/depuis un véhicule (4), le bras mobile (6) a une première extrémité (10) reliée au véhicule et une deuxième extrémité (12) agencée pour relier le bras mobile (6) à l'objet porteur de charge (8) pendant le chargement ou le déchargement, l'équipement de chantier (2) comprend un ensemble de cadre de levage (14) agencé pour charger et décharger l'objet porteur de charge (8) vers/du véhicule (4), l'ensemble de cadre de levage (14) comprend un cadre de levage (16) agencé pour relier l'équipement de chantier (2) à l'objet porteur de charge (8) pendant le chargement et le déchargement vers/du véhicule (4), dans lequel le cadre de levage (16) a un côté arrière (55) agencé vers l'équipement de chantier (2), un côté avant (56) agencé pour faire face à l'objet porteur de charge (8), pendant le chargement et le déchargement, et un ensemble de connecteurs (20, 24) monté sur le cadre de levage (16) qui est en outre agencé pour verrouiller le cadre de levage (16) aux parties de connexion correspondantes (28, 30) de l'objet porteur de charge (8) pendant le chargement et le déchargement vers/du véhicule (4), chacune d'au moins deux de l'ensemble de connecteurs (20, 24) comprend une structure de connexion (51) agencée pour pivoter autour d'un axe de pivot (57) entre une position fermée dans laquelle le cadre de levage (16) est agencé pour être verrouillé à l'objet porteur de charge (8) et une plage de position rétractée dans laquelle le cadre de levage (16) n'est pas verrouillé à l'objet porteur de charge (8), et en ce que ledit axe de pivotement (57) est parallèle à un axe de symétrie vertical S du cadre de levage, chaque structure de connexion (51) comprend une saillie de verrouillage (52) agencée pour s'engager avec une cavité correspondante au niveau d'une partie de connexion (28, 30) de l'objet porteur de charge (8) à verrouiller, lorsqu'il est en position fermée, le cadre de levage (16) à l'objet porteur de charge (8), et un actionneur (53) agencé pour commander le mouvement de pivotement de la structure de connexion (51) entre la position fermée et la plage de position rétractée en déplaçant la structure de connexion (51) autour dudit axe de pivotement (57), et dans lequel, dans la plage de position rétractée, la structure de connexion (51) est agencée pour être pivotée dans une plage de position entièrement rétractée, étant une plage de positions où aucune partie de la structure de connexion (51) ne s'étend au-delà d'un plan de contact virtuel plan V défini par des surfaces de contact d'objet de support de charge du côté avant (56) du cadre de levage (16) dans la direction de l'objet de support de charge (8), dans lequel l'équipement de chantier comprend des actionneurs hydrauliques et/ou électriques (44, 53) agencés pour commander les mouvements de pivotement des structures de connexion (51) **caractérisé en ce qu'**il comprend en outre un système d'actionneur (32), un système de capteur (34) fourni pour surveiller les mouvements de l'équipement de chantier (2) et du cadre de levage (16), et une unité de commande (36) configurée pour générer des instructions de commande (38, 46) pour commander le fonctionnement du système d'actionneurs (32) et des actionneurs hydrauliques et/ou électriques (44, 53) en réponse à une commande de chargement/déchargement (40) pour le chargement et/ou le déchargement de l'objet porteur de charge (8) et des signaux de capteur (42) reçus du système de capteur (34).

2. Équipement de chantier (2) selon la revendication 1, dans lequel la structure de connexion (51) comprend un bras de pivotement (58) ayant une première extrémité connectée à un axe de pivotement dirigé le long dudit axe de pivotement (57), et une deuxième extrémité où la saillie de verrouillage (52) est fournie, dans lequel, dans ladite position fermée, le bras de pivotement (58) est configuré pour s'étendre essentiellement perpendiculairement audit côté avant (56) du cadre de levage (16) dans la direction de l'objet porteur de charge (8), et dans ladite plage de position rétractée, le bras de pivotement (58) est agencé pour exécuter son mouvement de pivotement dans un espace de mouvement au-delà d'un plan défini par un côté transversal (54) du cadre de levage (16), dans lequel ledit côté transversal a une extension essentiellement perpendiculaire audit côté arrière (55) et audit côté avant (56) du cadre de levage (16).

3. Équipement de chantier (2) selon la revendication 1 ou 2, dans lequel ledit axe de pivotement (57) est aligné avec un côté transversal (54) dudit cadre de levage (16), et dans lequel ledit côté transversal a une extension essentiellement perpendiculaire audit côté arrière (55) et audit côté avant (56) du cadre de levage (16).

4. Équipement de chantier (2) selon l'une quelconque des revendications 1 à 3, dans lequel ledit axe de pivotement (57) est aligné avec le côté arrière (55) du cadre de levage.

5. Équipement de chantier (2) selon l'une quelconque des revendications 1 à 4, dans lequel ledit actionneur (53) est un actionneur linéaire.

6. Équipement de chantier (2) selon l'une quelconque des revendications 1 à 3, dans lequel ledit axe de pivotement (57) est aligné avec le côté arrière (55) du cadre de levage (16), et dans lequel ledit actionneur (53) est un actionneur linéaire, et dans lequel ledit actionneur linéaire est fixé au cadre de levage (16) à proximité dudit côté avant (56) du cadre de levage (16), et configuré pour appliquer un mouvement de pivotement à ladite structure de connexion (51) en appliquant des forces linéaires de poussée et/ou de traction à un bras de pivotement (58) de ladite structure de connexion (51).

7. Équipement de chantier (2) selon l'une quelconque des revendications 1 à 4, dans lequel ledit actionneur (53) est un actionneur de torsion configuré pour appliquer un mouvement de torsion à un axe de pivotement, dirigé le long dudit axe de pivotement (57), de la structure de connexion (51).

8. Équipement de chantier (2) selon l'une quelconque des revendications 1 à 7, dans lequel toutes lesdites structures de connexion (51) sont configurées pour être commandées pour être dans ladite plage de positions complètement rétractées pendant un processus d'alignement lors de l'alignement du cadre de levage (16) sur l'objet porteur de charge (8) afin de procéder à la charge en verrouillant le cadre de levage (16) sur l'objet porteur de charge (8).

9. Équipement de chantier (2) selon l'une quelconque des revendications 1 à 8, dans lequel ledit ensemble de connecteurs comprend une paire de connecteurs supérieurs (20) montés sur des côtés opposés d'une partie supérieure (22) du cadre de levage (16), et une paire de connecteurs inférieurs (24) montés sur des côtés opposés d'une partie inférieure (26) du cadre de levage (16), et dans lequel chacun desdits connecteurs inférieurs (24) comprend une dite structure de connexion (51).

10. Véhicule comprenant un équipement de chantier selon l'une quelconque des revendications 1 à 9.
